# EUROPEAN PATENT APPLICATION

(11) **EP 1 347 208 A2**
(43) Date of publication of application: **24.09.2003**
(21) Application number: 03075767.8
(22) Date of filing: 17.03.2003
(51) Int. Cl.: F16H 25/24

(54) **Method for converting a rotation into a translation and arrangement for executing that method**

(30) Priority: 18.03.2002 NL 1020196
(71) Applicant: ter Horst- te Mebel, Wilhelmina Elisabeth, 7011 EB Gaanderen (NL); Poot, Frank Theo Jacob, 3144 NA Maassluis (NL)
(72) Inventor: ter Horst-te Mebel, Wilhelmina Elisabeth, 7011 EB Gaanderen (NL)

(57) **Abstract**

The invention relates to a actuator (5) which may be used in for example raising tables, lifting trucks, building struts, lifts and the like. The inventive actuator (5) converts a rotational movement into a translational movement by transferring the rotational movement to a helically shaped body (1) that is embedded in an amorphous environment of granular material (6).

## Description

The invention relates to a method for converting a rotational movement into a translational movement, in which an at least substantially helically shaped body is rotated in an environment round a longitudinal axis. Methods of this kind are known. They are used for example in a traditional screw jack, in which a support provided with a screw thread is rotated inside a bush, provided with a complementary screw thread. With the aid of this known method, relatively heavy loads may be lifted.

The method according to the invention also uses for example a shaft, provided with a screw thread or an equivalent structure, but according to the inventive method the helically shaped body is rotated in a basically amorphous environment of granular material, in which it moves on while rotating, in this way realising a translational movement. A first advantage is that the method may be employed with only one part, the helically shaped body. In that case, the environment may consist of an arbitrary granular material, like for example sand or clay. On the other hand, if one attempts to reduce friction or if other parameters must be controlled more precisely, for example a specified elasticity, then the helically shaped body may be rotated in a selected environment. This environment may be realised inside housing, placed round the helically shaped body. One may select for example small spheres made of a synthetic material if the friction is to be minimised. By selecting the hardness of the spheres, one may realise a desired elasticity.

The invention also relates to an arrangement for converting a rotational movement into a translational movement, provided with an at least substantially helically shaped body that is mounted for rotation round its longitudinal axis inside an environment. An arrangement of this kind is for example a screw jack, which is used for lifting heavy loads. In that known arrangement, a support provided with a screw thread is rotated inside a bush provided with a complementary screw thread. In the arrangement according to the invention, a part co-operating with the helically shaped body is in fact missing. More precisely, the inventive arrangement is characterised in that the helically shaped body is arranged for operationally co-operating with a basically amorphous environment, consisting of a granular material.

A favourable embodiment of the inventive arrangement is characterised in that the body is surrounded by a housing, filled with a granular material. In this way, the parameters of the granular material can be selected, for example for realising a low friction, so that a high performance conversion of a rotational movement into a translational movement can be obtained.

A further favourable embodiment of the inventive arrangement is characterised in that the arrangement is provided with drive means for rotating the body or the housing, which results in an integrated arrangement that may replace for example a hydraulic cylinder. The big advantage of the inventive arrangement as compared to a hydraulic cylinder is that in case of a leak or in case of a failure of the steering, the inventive arrangement will persevere in its present state, without a need for additional aids. Moreover, hydraulic liquids are absent in the inventive arrangement, which is a great advantage from an environmental point of view.

A further favourable embodiment of the inventive arrangement is characterised in that the arrangement is provided with vibration means, which may reduce possible sticking of the granular material to the helically shaped body, which in turn will reduce friction. A favourable embodiment that may still further reduce friction is characterised in that the granular material consists of small spheres of for example a synthetic material. Friction may be reduced even further by filling a space between the small spheres at least partly with a liquid or a gel.

The invention will be further explained now with a reference to the following figures, in which:
- Fig. 1: represents a possible embodiment of an arrangement according to the invention;
- Fig. 2: represents an alternative embodiment of the arrangement according to the invention;
- Fig. 3: represents a possible embodiment of an actuator;
- Fig. 4: represents an alternative embodiment of an actuator;
- Fig. 5: represents more in detail a possible embodiment of an actuator;
- Fig. 6: schematically represents a multistage arrangement according to the invention.

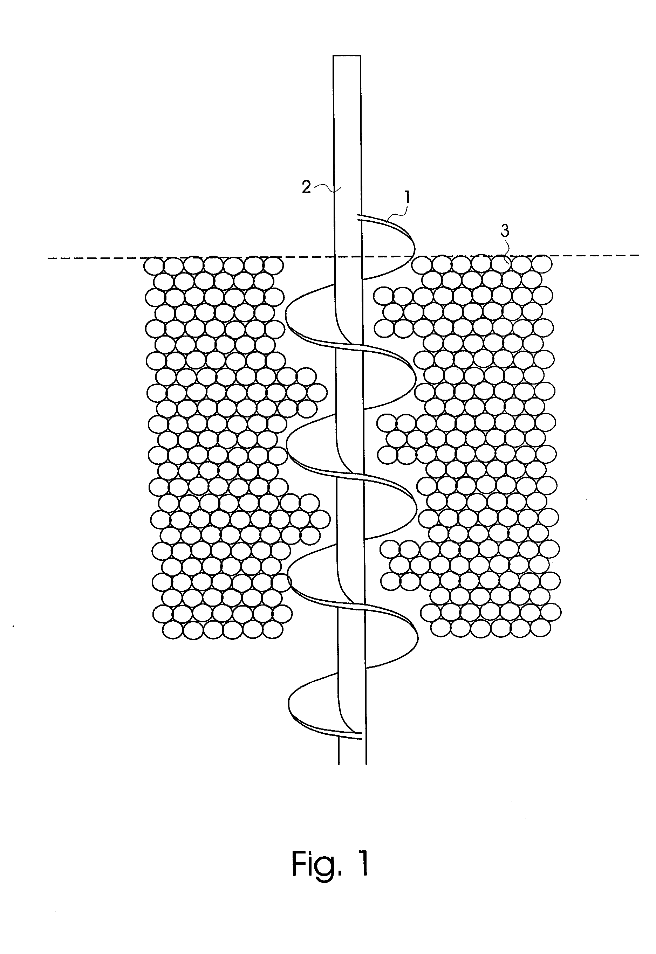

Fig. 1 represents a possible embodiment of an arrangement according to the invention, consisting of a jackscrew 1, provided with a central shaft 2. Jackscrew 1 is for example screwed into the soil 3, after which a load to be lifted, for example a building, is placed above one or more arrangements according to the invention. The load may be lifted now by rotating jackscrew 1 with the aid of central shaft out of the soil 3.

Dependent upon the weight of the load and the condition of the soil, the necessary area of the jackscrew can be determined. Dependent upon the available couple of the means that rotate central shaft 2, a pitch can be determined in an obvious manner for jackscrew 1.

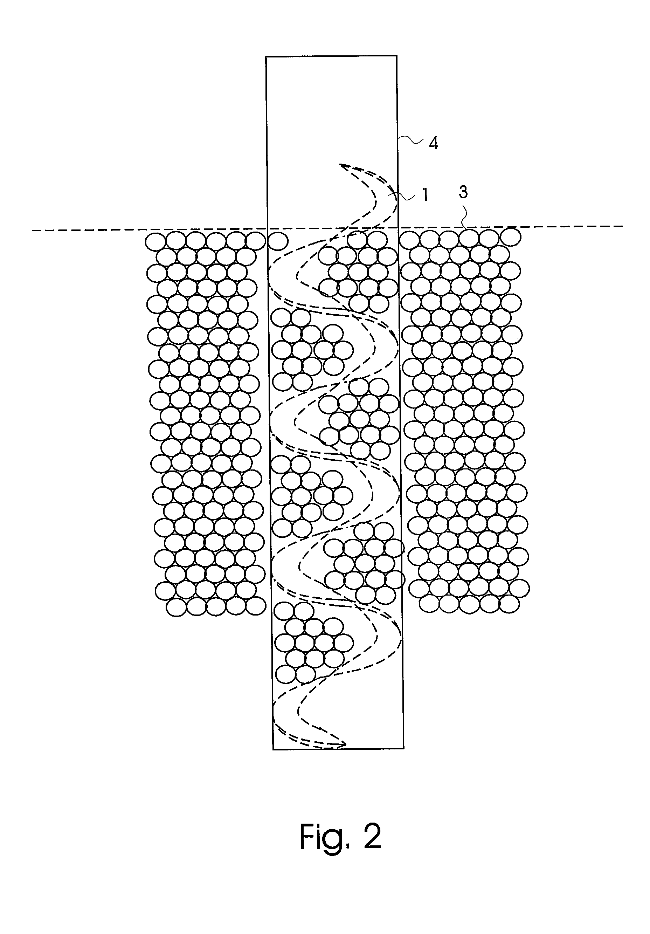

Fig. 2 represents an alternative embodiment of the arrangement according to the invention, consisting of a jackscrew 1, placed inside a tube 4. Jackscrew 1 is rotated into the soil 3, after which a load to be lifted, for example a building, is placed above one or more arrangements according to the invention. The load may be lifted now by rotating jackscrew 1 with the aid of tube 4 out of the soil 3. Because of the high buckling resistance of tube 4, a simple arrangement according to the invention may be realised for lifting very weighty loads.

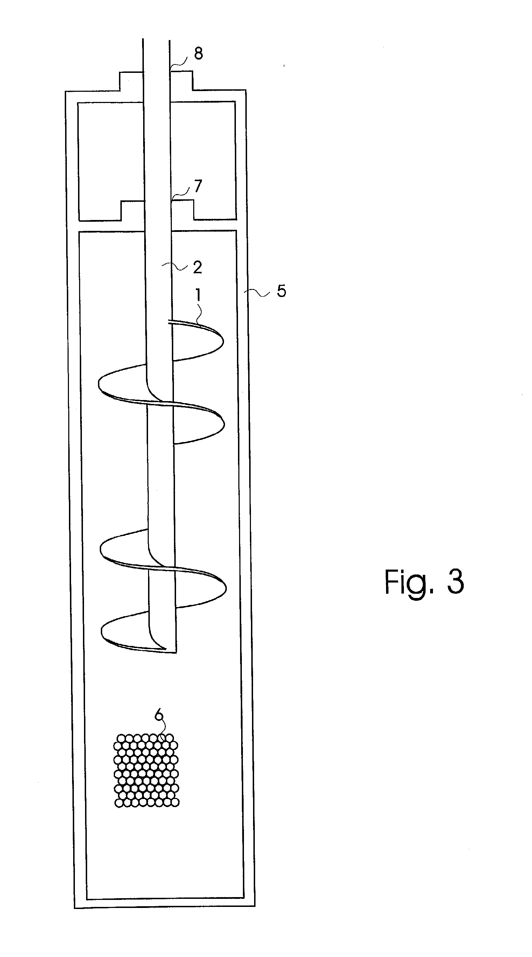

Fig. 3 represents a possible embodiment of an actuator, consisting of a jackscrew 1, provided with a central shaft 2 and a housing 5 which is substantially completely filled with a granular material 6. Central shaft 2 projects outside housing 6 via a bearing 7 and possibly a second bearing 8, which together form an external bearing for central shaft 2. If central shaft 2 is rotated, jackscrew 1 will move through the granular material 6 and central shaft 2 will move outward or inward, dependent upon the direction of rotation. The same movement of central shaft 2 with respect to housing 5 can be obtained by rotating housing 5 instead of central shaft 2. An important advantage of the inventive actuator is that its position is maintained in the event that it does not receive any steering, a fact that may improve safety for many applications. It is noted that jackscrew 1 consists of only a few distributed windings. The location of these windings onto central shaft 2 is in fact arbitrary, as they move in a basically amorphous environment.

Granular material 6 consists preferably of little balls, which may be fabricated, dependent upon the application, of substantially any material. When a very stiff actuator is demanded, the balls may be made of metal. It may be advantageous then to add some oil, in order to reduce the friction between the balls and jackscrew 1 and between the balls themselves. Preferably, the oil is added in the form of a gel, so that leakage can be excluded. When a slightly resilient actuator is demanded, the balls may be made of a synthetic material, preferably a fatty, synthetic material like teflon, delrin or high-density polyethylene. If desired, a lubricant may be added, or a high viscosity liquid which may add some damping to the actuator. In this way, for example cheap adjustable shock absorbers may be realised.

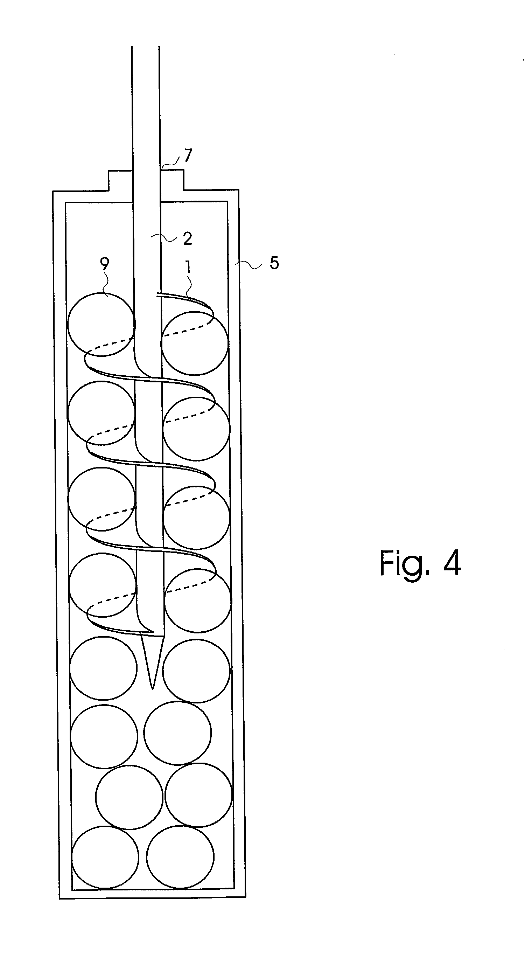

Fig. 4 represents an alternative embodiment of an actuator, consisting of a jackscrew 1, provided with a central shaft 2 and a housing 5 which is substantially completely filled with balls 9 which fit with some play between central shaft 2 and the inside of the wall of housing 5. Balls 9 behave like a basically amorphous mass, through which jackscrew 1 can rotate while moving inward or outward, dependent upon the direction of rotation. The same movement of central shaft 2 with respect to housing 5 can be obtained by rotating housing 5 instead of central shaft 2. The balls 9 moreover form an internal bearing for central shaft 2. The space between the balls 9 may be filled up with a granular material or with a gel if desired.

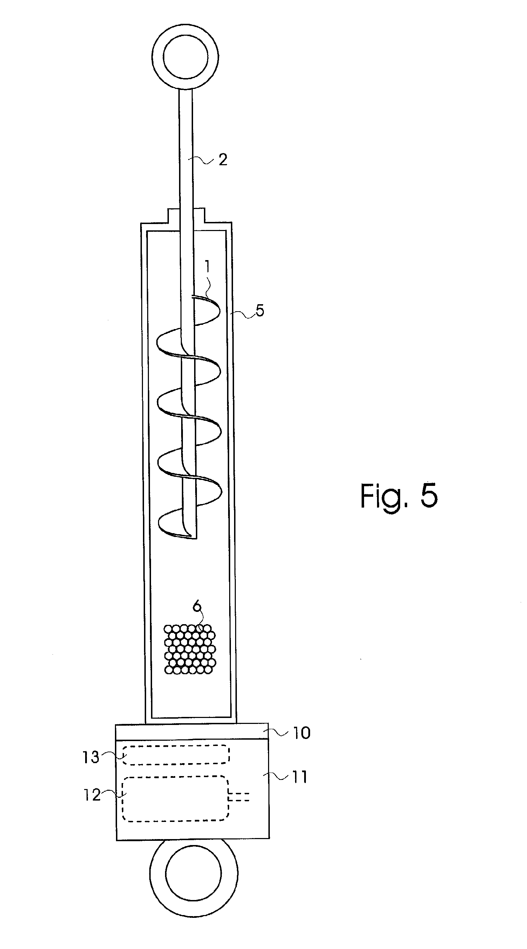

Fig. 5 represents more in detail a possible embodiment of an actuator that can be used for replacing a hydraulic actuator, well known in the art. For that purpose, housing 6 is mounted onto a disc 10 which belongs to a gear drive 11, as such obvious for the skilled man, in which an electric motor 12 and a gear, not shown, can rotate disc 10 with respect to gear drive 11, so that housing 5 will rotate round its longitudinal axis. As a result, shaft 2 will move inward or outward in the granular material 6, and dependent upon the direction of rotation of electric motor 12 the length of the actuator will increase or decrease. The advantage compared to a hydraulic actuator is that no hydraulic pump unit and no hydraulic liquid are necessary. Another important advantage is that the position of the inventive actuator is maintained in the event that no steering is received. In gear drive 11, a vibrator 13 can be placed which may reduce sticking from granular material 6 to jackscrew 1.

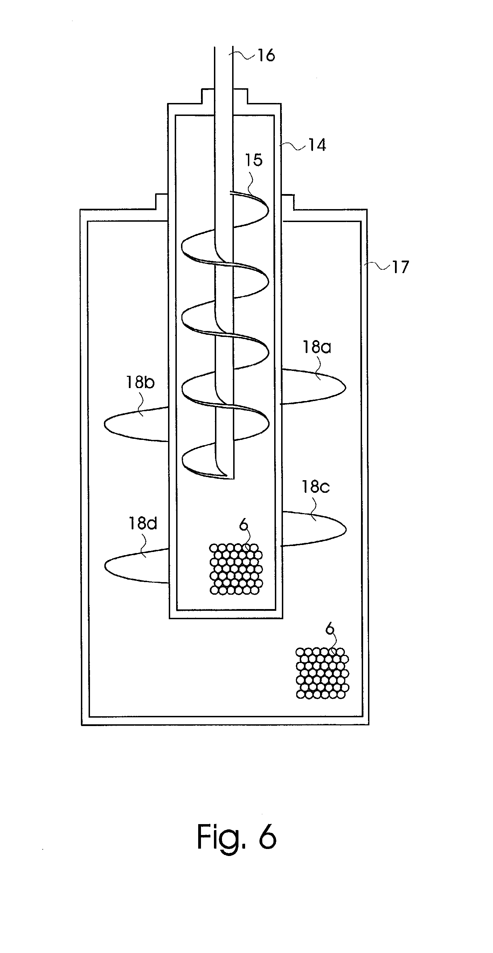

Fig. 6 schematically represents a multistage arrangement according to the invention, in which a first actuator 14 provided with a jackscrew 15, a central shaft 16 and granular material 6 forms in fact a central shaft by itself for a second actuator 17. On the outside of first actuator 14, four plates 18a,18b,18c,18d have been mounted somewhat sloping, which plates may be seen as parts of a jackscrew or perhaps as blades of a propeller, which will bring about a translation by interacting with granular material 6 when first actuator 14 is rotated with respect to second actuator 17.

When central shaft 16 is rotated with respect to second actuator 17, then either first actuator 14 or second actuator 17 will first bring about a translation, dependent upon the question where the largest translational forces will be generated. This can simply be chosen by selecting the surface areas of jackscrew 15 and plates 18a,18b, 18c,18d. The translational speed can be chosen by selecting the pitch of jackscrew 15 and plates 18a,18b,18c,18d. In this way, a multistage arrangement may be realised, with previously determined properties. More in particular, a multistage arrangement may be realised with a constant translational speed.

## Claims

1. Method for converting a rotational movement into a translational movement, in which an at least substantially helically shaped body is rotated in an environment round a longitudinal axis, **characterised in that** the helically shaped body is rotated in a basically amorphous environment of granular material, in which it moves on while rotating.

2. Arrangement for converting a rotational movement into a translational movement, provided with an at least substantially helically shaped body which is mounted for rotation round its longitudinal axis inside an environment, **characterised in that** the helically shaped body is arranged for operationally co-operating with a basically amorphous environment, consisting of a granular material.

3. Arrangement according to claim 2, **characterised in that** the body is surrounded by a housing, filled with a granular material.

4. Arrangement according to claim 2 of 3, **characterised in that** the arrangement is provided with drive means for rotating the body or the housing.

5. Arrangement according to claim 2 of 3, **characterised in that** the arrangement is provided with vibration means.

6. Arrangement according to claim 3, **characterised in that** the granular material consists of small spheres.

7. Arrangement according to claim 6, **characterised in that** the small spheres are made of a synthetic material.

8. Arrangement according to claim 6, **characterised in that** a space between the small spheres is at least partly filled with a liquid or a gel.
